# FASCICULE DE BREVET EUROPEEN

(11) **EP 3 400 169 B1**
(45) Date de publication et mention de la délivrance du brevet: **13.11.2019**
(21) Numéro de dépôt: 17702673.9
(22) Date de dépôt: 04.01.2017
(51) Int. Cl.: B64C 11/38

(54) **DISPOSITIF POUR LE VERROUILLAGE DU PAS ET LA MISE EN DRAPEAU DE PALES DE SOUFFLANTE À ORIENTATION RÉGLABLE D'UNE HÉLICE DE TURBOMACHINE**
BLATTVERSTELLUNG SPERREN UND SEGELSTELLUNG FÜR TURBOFAN BLÄTTER
BLADE-PITCH LOCKING AND FEATHERING MECHANISM FOR VARIABLE PITCH BLADES OF A TURBOFAN

(30) Priorité: 05.01.2016 FR 1650041
(43) Date de publication de la demande: 14.11.2018
(73) Titulaire: Safran Aircraft Engines, 75015 Paris (FR)
(72) Inventeur: PATSOURIS, Emmanuel Pierre Dimitri, 77550 Moissy-Cramayel Cedex (FR); TAJAN, Sébastien Emile Philippe, 77550 Moissy-Cramayel Cedex (FR)
(74) Mandataire: Cabinet Beau de Loménie
(86) Numéro de dépôt international: PCT/FR2017/050012
(87) Numéro de publication internationale: WO 2017/118809

(56) Documents cités:
- WO-A1-2012/066240
- US-A- 3 057 410

## Description

### Arrière-plan de l'invention

La présente invention se rapporte au domaine général des turbomachines équipées d'une ou deux soufflante(s) carénée(s) ou non carénée(s), et plus particulièrement à la commande de l'orientation des pales de soufflante(s) de ces turbomachines.

Un domaine privilégié d'application de l'invention concerne les turboréacteurs à hélices contrarotatives, appelés « Open Rotor » en anglais, qui comprennent deux hélices contrarotatives placées en aval (version « pusher » en anglais) ou en amont (version « puller » en anglais) du générateur de gaz. Toutefois, l'invention s'applique également aux turbopropulseurs à une ou plusieurs hélices propulsives.

Dans un turboréacteur à hélice(s), il est connu que l'orientation (ou calage) des pales qui forment ces hélices constitue l'un des paramètres permettant de gérer la poussée du turboréacteur, notamment en faisant fonctionner l'hélice toujours dans les meilleures conditions possibles. En effet, le régime des hélices est quasiment constant sur toutes les phases de fonctionnement, et c'est le calage des pales des hélices qui fait varier la poussée. Ainsi, en phase de vol de croisière, on cherche à obtenir la plus faible puissance possible sur l'arbre de turbine qui est nécessaire pour une traction donnée à une vitesse de l'avion donnée, de sorte à obtenir le meilleur rendement (c'est-à-dire le rendement permettant de minimiser la consommation de carburant et d'augmenter la distance franchissable). A l'inverse, au décollage, la traction la plus forte possible est recherchée afin d'accélérer puis de faire décoller l'avion.

L'orientation des pales des hélices nécessite de prendre certaines mesures de sécurité afin de s'assurer que les pales ne restent pas bloquées dans certaines positions suite notamment à un disfonctionnement des systèmes de commande de leur orientation. Par exemple, sous leur propre effet centrifuge, les pales ont tendance à se mettre en position à plat (ou position « voile » qui correspond à un calage pour lequel leur corde forme un angle de 90° avec l'axe de rotation de l'hélice). Or, une pale bloquée dans cette position à plat génère peu de couple résistif et risque de partir en survitesse, avec le risque que cela comporte de perdre la pale et/ou le moyeu rotatif qui la porte. Une pale bloquée dans cette position risque également de générer une traînée excessive et inacceptable pour l'avion. De même, pendant le vol, un passage en mode d'inversion de poussée (« reserve » en anglais - correspondant à un calage pour lequel la corde des pales forme un angle de 120° avec l'axe de rotation de l'hélice) suite à une défaillance du système de commande de l'orientation des pales présente le risque de rendre l'aéronef incontrôlable et de provoquer sa chute.

Il est ainsi connu de chercher à limiter les positions angulaires des pales des hélices pour que celles-ci : ne passent pas en mode d'inversion de poussée ou en position à plat pendant un vol, ne restent pas en position à plat pendant que l'aéronef est au sol et que le moteur tourne, et puissent prendre toutes les positions autorisées lorsque les hélices ne tournent pas. Par ailleurs, dans le cas d'une défaillance du système de commande de l'orientation des pales, les pales doivent être capables de prendre une position dite « en drapeau », c'est-à-dire un calage dans lequel leur corde s'aligne avec l'axe de rotation de l'hélice, réduisant ainsi la traînée qu'elles génèrent et générant suffisamment de couple résistif pour empêcher le départ en survitesse.

Dans le cadre de la présente invention, ces contraintes de limitation des positions angulaires et de mise en drapeau des pales des hélices doivent s'intégrer dans le cas d'un système de commande de l'orientation des pales du type comprenant un vérin annulaire axial situé dans un repère fixe par rapport aux structures du moteur.

Or, avec ce type de commande, les dispositifs connus pour verrouiller le pas et mettre en drapeau les pales des hélices présentent de nombreux inconvénients. On pourra par exemple mentionner les systèmes lourds utilisant des contrepoids dont l'effort centrifuge permet de ramener les pales en drapeau comme décrit dans les publications WO 2012/066240 et FR 2,957,329.

### Objet et résumé de l'invention

La présente invention a donc pour but principal de proposer un dispositif pour le verrouillage du pas et la mise en drapeau d'aubes de soufflante à orientation réglable d'une hélice de turbomachine (à soufflante carénée ou non carénée) qui ne présente les inconvénients précités.

Conformément à l'invention, ce but est atteint grâce à un dispositif pour le verrouillage du pas et la mise en drapeau de pales de soufflante à orientation réglable d'une hélice de turbomachine, comprenant :
un vérin comprenant au moins une partie mobile de vérin s'étendant parallèlement à un axe de rotation de l'hélice et destinée à être couplée à des pivots des pales de soufflante de l'hélice pour modifier leur calage de pas lorsqu'elle coulisse ;
une pièce mobile par rapport au vérin comprenant des premiers moyens mécaniques aptes à coopérer avec le vérin en position de déverrouillage du pas de la pale de soufflante pour permettre à la partie mobile de vérin de coulisser selon une course de vérin étendue ; et des deuxièmes moyens mécaniques distincts des premiers moyens mécaniques et aptes à coopérer avec le vérin en position de verrouillage du pas de la pale de soufflante pour permettre à la partie mobile de vérin de coulisser selon une course de vérin réduite par rapport à la course de vérin étendue ; et
un actionneur pour déplacer la pièce mobile entre la position de déverrouillage du vérin et la position de verrouillage du vérin.

Dans un mode de réalisation, la pièce mobile peut être une couronne centrée sur l'axe de rotation de l'hélice, et les premiers moyens mécaniques peuvent être configurés pour coopérer avec le vérin en position de déverrouillage du pas de la pale de soufflante pour permettre à la partie mobile de vérin de coulisser selon une course de vérin étendue, les deuxièmes moyens mécaniques peuvent être décalés angulairement par rapport aux premiers moyens mécaniques et configurés pour coopérer avec le vérin en position de verrouillage du pas de la pale de soufflante pour permettre à la partie mobile de vérin de coulisser selon une course de vérin réduite par rapport à la course de vérin étendue, et l'actionneur peut comprendre des moyens pour faire pivoter la couronne autour de l'axe de rotation de l'hélice.

Par « pales de soufflante », on entend ici aussi bien les pales d'une hélice (dans le cas d'une turbomachine à soufflante non carénée) que les aubes d'une soufflante (dans le cas d'une turbomachine à soufflante carénée).

En fonction de la position angulaire de couronne, la course du vérin varie (d'une course étendue à une course réduite). En agissant ainsi mécaniquement sur le vérin, le dispositif selon l'invention permet de limiter les plages angulaires de calage des pales de l'hélice selon la phase de vol. Ce dispositif purement mécanique est fiable, irréversible (les pales ne peuvent pas commander le dispositif), simple de mise en œuvre et apporte un gain de masse conséquent par rapport aux dispositifs utilisant des contrepoids. De plus, ce dispositif utilise une source d'énergie pour alimenter les moyens pour faire pivoter la couronne autour de l'axe de rotation de l'hélice qui est indépendante de la source d'énergie utilisée pour le système de commande de l'orientation des pales, ce qui apporte un gain de fiabilité supplémentaire. Un tel dispositif est aussi parfaitement adapté aux systèmes de commande nécessitant un faible encombrement radial.

La partie mobile de vérin peut comprendre un méplat et les premiers moyens mécaniques de la pièce mobile comprendre une encoche formée au niveau d'une partie en regard de la partie mobile du vérin, telle que la périphérie intérieure de la couronne lorsque la pièce mobile est une couronne, et le long de laquelle le méplat de la partie mobile de vérin peut coulisser en position de déverrouillage du pas de la pale de soufflante. De même, les deuxièmes moyens mécaniques de la pièce mobile peuvent comprendre une butée contre laquelle le méplat de la partie mobile de vérin vient en butée en position de verrouillage du pas de la pale de soufflante.

Dans ce cas, le dispositif agit comme un mécanisme séquentiel dans lequel un mouvement de la pièce mobile ne peut s'effectuer qu'en fonction de la position de la partie mobile de vérin et un mouvement de la partie mobile de vérin ne peut s'effectuer qu'en fonction de la position de la pièce mobile.

De préférence, la pièce mobile comprend en outre des troisièmes moyens mécaniques distincts, c'est-à-dire dans le cas d'une couronne décalés angulairement, des premiers et deuxièmes moyens mécaniques et aptes à coopérer avec le vérin pour l'amener en position de mise en drapeau de la pale de soufflante (notamment en cas de défaillance de la commande de leur orientation).

Dans ce cas, les troisièmes moyens mécaniques de pièce mobile peuvent comprendre une rampe faisant saillie depuis une face latérale de ladite pièce mobile et formant chemin de came le long duquel le méplat de la partie mobile vient coulisser pour amener la partie mobile de vérin en position de mise en drapeau de la pale de soufflante. Le dispositif est ainsi irréversible en ce sens que l'orientation de la rampe peut commander l'orientation des pales (pour leur mise en drapeau) mais l'orientation des pales ne peut pas commander l'orientation de la rampe qui présente un angle de frottement trop important avec les parties mobiles de vérin.

De la sorte, la pièce mobile du dispositif agit comme un verrou : la partie mobile de vérin peut être déplacée ou non en fonction de la position de la pièce mobile, c'est-à-dire en fonction de la position angulaire de la couronne dans le cas où la pièce mobile est une couronne. Inversement, la pièce mobile peut être déplacée ou non en fonction de la position de la partie mobile du vérin.

Les moyens pour faire pivoter la couronne autour de l'axe de rotation de l'hélice peuvent comprendre un actionneur muni d'un pignon denté engrenant avec des dents portées par la couronne. Dans ce cas, les dents de la couronne peuvent être positionnées au niveau d'une périphérie extérieure de la couronne et s'étendre angulairement sur une portion de ladite couronne.

La partie mobile de vérin peut être positionnée à l'intérieur de la couronne. La longueur de la course de vérin étendue correspond de préférence sensiblement à la course autorisée pendant le vol du vérin. Le dispositif peut comprendre trois parties mobiles de vérin régulièrement réparties autour de l'axe de rotation de l'hélice.

L'invention a également pour objet un système de commande de l'orientation des pales de soufflante d'une turbomachine, comprenant au moins une hélice munie de pales de soufflante à orientation réglable, ladite hélice étant solidaire en rotation d'un anneau rotatif, les pales de soufflante étant couplées, pour le réglage de leur orientation, à un système à vérin et à palier de transfert de mouvement, le système comprenant en outre un dispositif tel que défini précédemment pour le verrouillage du pas et la mise en drapeau des pales.

L'invention a encore pour objet une turbomachine comprenant au moins un ensemble de pales de soufflante à orientation réglable et un tel système de commande de l'orientation desdites pales de soufflante.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe montrant un exemple d'implantation du dispositif selon un premier mode de réalisation de l'invention ;
- les figures 2A et 2B sont des vues schématiques selon deux directions opposées du dispositif selon le premier mode de réalisation de l'invention dans la position de déverrouillage du pas ;
- les figures 3A et 3B sont des vues schématiques selon deux directions opposées du dispositif selon le premier mode de réalisation de l'invention dans la position de verrouillage du pas ;
- les figures 4A et 4B sont des vues schématiques selon deux directions opposées du dispositif selon le premier mode de réalisation de l'invention dans la position de mise en drapeau ; et
- les figures 5A, 5B et 5C sont des vues schématiques du dispositif selon un second mode de réalisation de l'invention respectivement dans la position de déverrouillage du pas, dans la position de verrouillage du pas et dans la position de mise en drapeau.

### Description détaillée de l'invention

L'invention s'applique à toute turbomachine équipée d'au moins une soufflante carénée ou non carénée, et dont les pales d'hélice (dans le cas d'une soufflante non carénée) ou les aubes de soufflante (dans le cas d'une soufflante carénée) sont équipées d'un système de changement de pas.

L'invention s'applique en particulier aux turbopropulseurs à une ou plusieurs hélices propulsives, ainsi qu'aux turboréacteurs à hélice(s) (appelés « Open Rotor » en anglais) qui comprennent une hélice (et un stator à calage variable pour l'USF - « Unducted Single Fan », soit « soufflante non carénée unique ») ou deux hélices contrarotatives placées en amont (en version « puller » en anglais) ou en aval (en version « pusher » en anglais) du générateur de gaz. L'invention s'applique encore aux turbomachines à soufflante carénée.

L'architecture de ces types de turbomachines est bien connue de l'homme du métier et ne sera donc pas décrite ici en détails. Brièvement, ces turbomachines comportent une ou plusieurs hélices (dans le cas d'une turbomachine à soufflante non carénée) ou une soufflante (dans le cas d'une turbomachine à soufflante carénée) constituées chacune d'un ensemble de pales (ou d'aubes) de soufflantes à angle de calage variable, c'est-à-dire que leur orientation peut être modifiée au moyen d'un système de commande de l'orientation des pales décrit ci-après.

Dans la suite de la description, on parlera d'hélice et de pales d'hélice indifféremment du fait que l'invention s'applique à une turbomachine à soufflante non carénée ou à une turbomachine à soufflante carénée (auquel l'hélice correspond à la soufflante et les pales d'hélice aux aubes de soufflante).

Une hélice de turbomachine est constituée d'un ensemble de pales de soufflantes à angle de calage variable indépendant ou non, c'est-à-dire que leur orientation peut être modifiée au moyen d'un système de commande de l'orientation des pales.

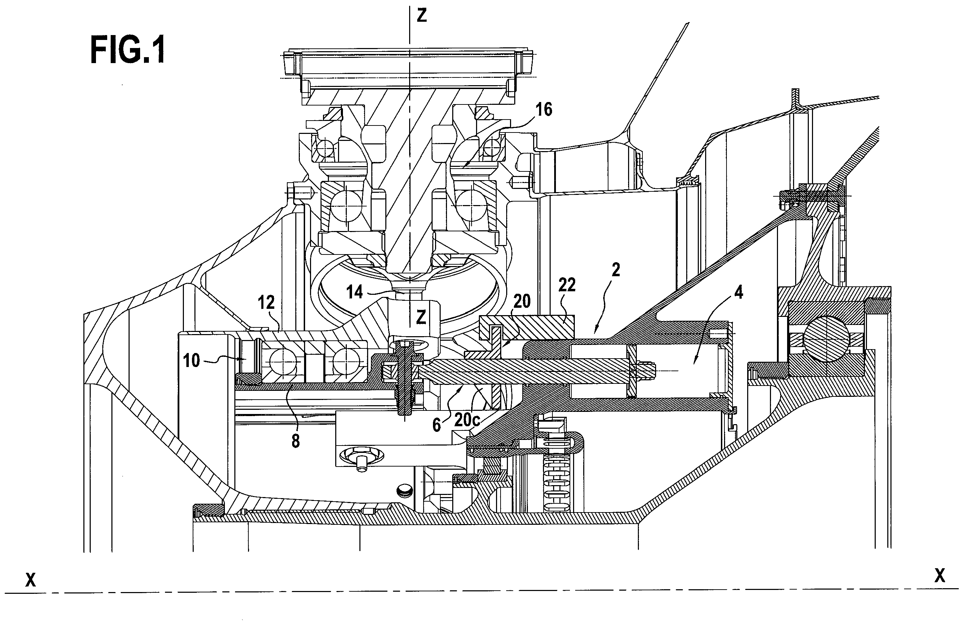

Comme représenté sur la figure 1, ce système de commande peut comprendre un vérin axial 2 centré sur l'axe de rotation X-X de l'hélice et fixe par rapport aux structures du moteur (l'axe de rotation de l'hélice est généralement confondu avec l'axe de la turbomachine mais peut être décalé dans certaines configurations).

Ce vérin 2 comprend une chambre 4 (i.e. partie fixe) et des tiges 6 (i.e. parties mobiles) qui peuvent se déplacer axialement de manière synchronisée lorsque le vérin est actionné. A leur extrémité libre, les tiges 6 sont reliées à la bague intérieure 8 d'un palier à roulement de transfert de mouvement 10 dont la bague extérieure 12 est couplée, par l'intermédiaire de bras de levier 14, à des pivots 16 des pales de soufflante de l'hélice montés sur un anneau rotatif 17 centré sur l'axe X-X. Ainsi, lorsque le vérin 2 est actionné, les tiges 6 translatent pour déplacer le palier à roulement de transfert de mouvement 10, ce qui entraîne un pivotement des pivots 16 des pales de soufflante autour de leur axe radial Z-Z et donc un changement de leur pas. Dans une variante de réalisation non représentée, le corps du vérin est mobile (i.e. partie mobile) en translation par rapport aux tiges de vérin qui sont fixes (i.e. partie fixe).

Selon l'invention, il est prévu un dispositif permettant de verrouiller le pas des pales de soufflante, et de mettre en drapeau celles-ci en cas de défaillance du système de commande de leur orientation.

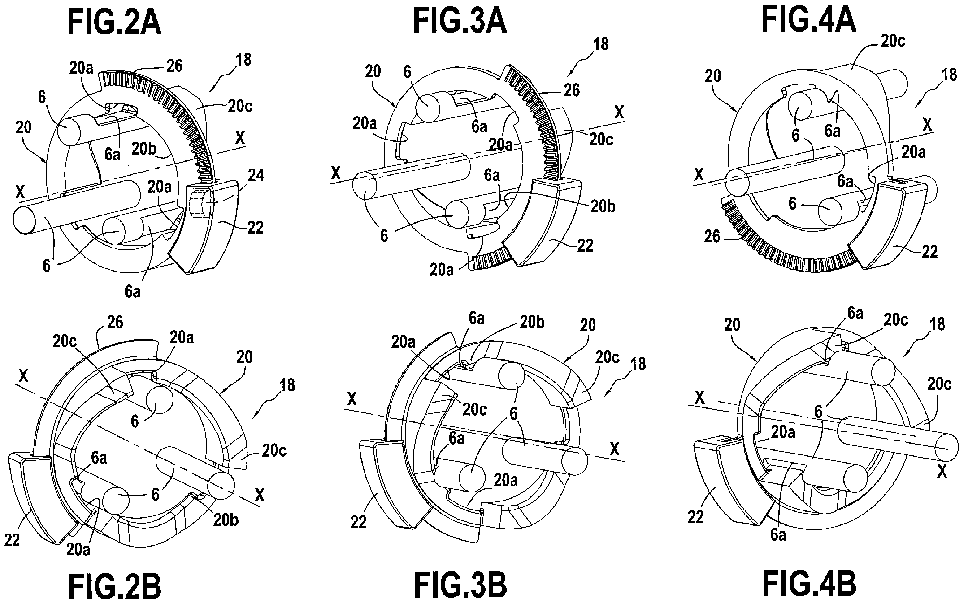

Les figures 2A-2B, 3A-3B et 4A-4B représentent un premier mode de réalisation d'un tel dispositif 18 dans différentes configuration de fonctionnement.

Comme représenté sur ces figures, le dispositif selon le premier mode de réalisation de l'invention comprend une couronne 20 centrée sur l'axe de rotation X-X de l'hélice et des moyens pour faire pivoter la couronne autour de cet axe X-X. La couronne est en revanche fixe axialement.

La couronne 20 est destinée à coopérer avec les tiges 6 du vérin axial, ici au nombre de trois régulièrement réparties autour de l'axe X-X. Plus précisément, elle est positionnée dans un plan transversal à l'axe X-X de l'hélice de sorte à entourer les tiges 6 du vérin. Celles-ci sont donc positionnées à l'intérieur de la couronne.

De plus, lorsqu'elles sont en position rentrées dans la chambre du vérin, c'est-à-dire le plus en aval possible, les tiges dépassent à l'extérieur de la chambre d'une longueur qui au moins supérieure à la course du vérin. La course du vérin permet d'amener les pales commandées d'une position drapeau à une position de calage le plus important qu'elles peuvent rencontrer en vol.

Chaque tige 6 comprend un méplat 6a qui est usiné dans la partie intermédiaire de la tige qui est extérieure à la chambre du vérin. Ce méplat 6a s'étend axialement sur une longueur qui correspond sensiblement à la course autorisée pendant le vol du vérin.

Ces méplats 6a des tiges sont destinés à coopérer avec différents moyens mécaniques formées au niveau de la périphérie intérieure de la couronne 20.

Ainsi, lorsque le dispositif est en position de déverrouillage du pas des pales de soufflante, les méplats coopèrent avec des encoches 20a formées au niveau de la périphérie intérieure de la couronne 20.

Les figures 2A et 2B montrent (en vue de l'amont pour la figure 2A et en vue de l'aval pour la figure 2B) le dispositif lorsqu'il est dans une telle position de déverrouillage du pas des pales de soufflante, c'est-à-dire lorsqu'il autorise le vérin du système de commande de l'orientation des pales à passer d'un calage des pales à un autre. A cet effet, dans cette position de déverrouillage, lorsque le vérin est actionné, le méplat 6a des tiges 6 peut coulisser librement le long des encoches 20a de la couronne 20 (selon l'axe X-X) de façon à modifier le pas des pales.

La couronne 20 du dispositif selon l'invention comprend également des butées 20b qui sont directement adjacentes aux encoches 20a et qui sont aptes à coopérer chacune avec le méplat 6a des tiges 6 du vérin lorsque le dispositif est en position de verrouillage du pas des pales de soufflante (figures 3A et 3B).

De façon plus précise, ces butées 20b peuvent se présenter sous la forme de crans formant butée qui empêchent les méplats 6a des tiges de coulisser sur toute leur longueur. De préférence, l'épaulement des méplats vient en butée mécanique contre ces crans.

Les figures 3A et 3B montrent (en vue de l'amont pour la figure 3A et en vue de l'aval pour la figure 3B) le dispositif lorsque la couronne 20 est pivotée pour se mettre en position de verrouillage du pas des pales de soufflante. Dans cette position, le dispositif limite la course du vérin du système de commande de l'orientation des pales pour empêcher ces dernières de venir en vol dans des positions de calage non autorisées. Les positions de calage non-autorisées sont notamment la position d'inversion de poussée et les autres calages provoquant une traînée excessive.

En d'autres termes, dans cette position de verrouillage, lorsque le vérin est actionné, le méplat 6a des tiges 6 peut coulisser de façon à modifier le pas des pales le long des encoches 20a de la couronne 20 (selon l'axe X-X) mais selon une course limitée par rapport à la position de déverrouillage des figures 2A et 2B.

La couronne 20 du dispositif selon l'invention comprend encore des rampes 20c formant chemin de came qui sont intercalées angulairement entre les encoches 20a et les butées 20b et qui sont aptes à coopérer avec le méplat 6a des tiges 6 du vérin lorsque le dispositif est en position de mise en drapeau des pales de soufflante (figures 4A et 4B).

Ces rampes 20c se présentent par exemple sous la forme de protubérances faisant saillie depuis une face latérale de la couronne 20 (dans le cas de figures 4A et 4B, elles font saillie du côté aval de la couronne). Lorsque les méplats 6a des tiges 6 du vérin viennent coulisser le long de ces rampes 20c, elles se trouvent dans une position qui empêche tout déplacement axial des tiges. Cette position correspond avantageusement à la position de mise en drapeau des pales de soufflante (les pales viennent aligner leur corde avec l'axe de rotation de l'hélice).

Les figures 4A et 4B montrent ainsi (en vue de l'amont pour la figure 4A et en vue de l'aval pour la figure 4B) le dispositif lorsque la couronne est pivotée angulairement pour se mettre en position de mise en drapeau des pales de soufflante. Lorsque la couronne pivote vers cette position, les tiges du vérin translatent axialement (l'épaulement de leur méplat vient en butée contre les rampes en suivant le chemin de came que forment ces rampes), ramenant ainsi les pales jusqu'à la position de mise en drapeau.

Dans cette position de mise en drapeau, on notera que le contact entre les tiges et la couronne reprend les efforts de rappel subis par les pales, ce qui occasionne une sur-contrainte au niveau de ce contact. Aussi, sur l'une des extrémités du méplat des tiges, il est avantageux de travailler la forme de celui-ci pour qu'il épouse la forme de la rampe de la couronne de sorte à augmenter la surface de contact entre le méplat et la rampe.

On décrira maintenant un exemple de réalisation des moyens permettant de faire pivoter la couronne 20 autour de l'axe X-X de rotation de l'hélice afin de mettre le dispositif dans l'une des positions décrites ci-avant (position de déverrouillage du pas des pales, position de verrouillage du pas de pales, et position de mise en drapeau des pales).

Dans l'exemple de réalisation représenté sur les figures 2A-2B, 3A-3B et 4A-4B, ces moyens comprennent un actionneur 22, par exemple électrique, qui est muni d'un pignon denté 24 engrenant avec des dents 26 portées par la couronne 20.

Plus précisément, les dents 26 sont positionnées au niveau d'une périphérie extérieure de la couronne 20 et s'étendent angulairement sur une portion de ladite couronne.

Ainsi, une commande permet de piloter l'actionneur 22 de sorte à faire pivoter la couronne 20 autour de l'axe X-X de rotation de l'hélice pour sélectionner dans quelle position le dispositif selon l'invention doit se trouver (position de déverrouillage du pas des pales, position de verrouillage du pas de pales, et position de mise en drapeau des pales).

Dans le mode de réalisation décrit ici, la couronne 20 coopère avec les tiges de vérin 6 (par l'intermédiaire de leur méplat 6a). Bien entendu, il est possible d'envisager une configuration dans laquelle la couronne coopère plutôt avec le corps du vérin (par l'intermédiaire par exemple d'un méplat formé sur ce corps).

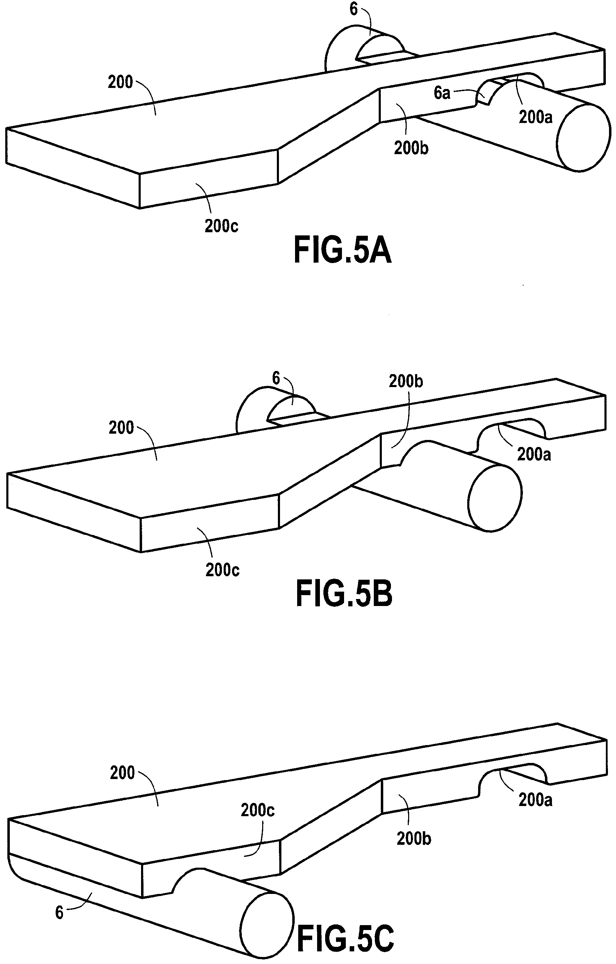

Les figures 5A, 5B et 5C représentent un second mode de réalisation d'un tel dispositif 18 dans différentes configuration de fonctionnement. Plus précisément, les figures 5A à 5C illustrent respectivement le dispositif 18 dans la position de déverrouillage du pas, dans la position de verrouillage du pas et dans la position de mise en drapeau.

Comme représenté sur ces figures 5A à 5C, le dispositif selon le second mode de réalisation de l'invention comprend, pour chaque tige 6 du vérin 2, une came 200 en translation orthogonale par rapport à la tige 6 à laquelle elle est associée et des moyens, non représentés, pour translater la came 200 orthogonalement à la tige 6 entre trois positions.

De plus, lorsqu'elles sont en position rentrées dans la chambre 4 du vérin 2, c'est-à-dire le plus en aval possible, les tiges 6 dépassent à l'extérieur de la chambre 4 d'une longueur qui est au moins supérieure à la course du vérin 2. La course du vérin 2 permet d'amener les pales commandées d'une position drapeau à une position de calage le plus important qu'elles peuvent rencontrer en vol.

Comme dans le premier mode de réalisation, chaque tige 6 comprend un méplat 6a qui est usiné dans la partie intermédiaire de la tige 6 qui est extérieure à la chambre 4 du vérin 2. Ce méplat 6a s'étend axialement sur une longueur qui correspond sensiblement à la course autorisée pendant le vol du vérin 2.

Ces méplats 6a des tiges 6 sont destinés à coopérer avec différents moyens mécaniques formées au niveau d'une partie de la came 200 en regard de la tige 6 à laquelle elle est associée.

Ainsi, lorsque le dispositif 18 est en position de déverrouillage du pas des pales de soufflante, le méplat 6a d'une tige 6 coopère avec l'encoche 200a de la came associée 200, l'encoche 200a étant formée sur une face de la came 200 en regard de la tige 6.

La figure 5A montre le dispositif 18 lorsqu'il est dans une telle position de déverrouillage du pas des pales de soufflante, c'est-à-dire lorsqu'il autorise le vérin 2 du système de commande de l'orientation des pales à passer d'un calage des pales à un autre. A cet effet, dans cette position de déverrouillage, lorsque le vérin 2 est actionné, le méplat 6a de la tige 6 peut coulisser librement le long de l'encoche 200a de la couronne 200 (selon l'axe X-X) de façon à modifier le pas des pales.

Chaque came 200 du dispositif 18 selon le second mode de réalisation de l'invention comprend également une butée 200b qui est directement adjacente à l'encoche 200a et qui est apte à coopérer avec le méplat 6a de la tige 6 du vérin 2 à laquelle elle est associée lorsque le dispositif 18 est en position de verrouillage du pas des pales de soufflante comme cela est illustré sur la figure 5B.

De façon plus précise, l'encoche 200a peut être formée par une extrusion dans la came et la butée 200b peut être formée par la came et plus précisément par l'épaisseur de la came formant une butée qui empêche le méplat 6a de la tige 6 de coulisser sur toute sa longueur. De préférence, l'épaulement du méplat vient en butée mécanique contre la butée 6a.

La figure 5B montre le dispositif 18 lorsque la came 200 est translatée en position de verrouillage du pas des pales de soufflante. Dans cette position, le dispositif 18 limite la course du vérin 2 du système de commande de l'orientation des pales pour empêcher ces dernières de venir en vol dans des positions de calage non autorisées. Les positions de calage non-autorisées sont notamment la position d'inversion de poussée et les autres calages provoquant une traînée excessive.

En d'autres termes, dans cette position de verrouillage, lorsque le vérin 2 est actionné, le méplat 6a des tiges 6 peut coulisser de façon à modifier le pas des pales le long des encoches 200a des cames 200 mais selon une course limitée par rapport à la position de déverrouillage de la figure 5A.

Chaque came 200 du dispositif 18 selon le second mode de réalisation de l'invention comprend encore une rampe 200c formant chemin de came. La butée 200b d'une came 200 est intercalée entre la rampe 200c et l'encoche 200a.

La rampe 200c se présente par exemple sous la forme d'une protubérance faisant saillie depuis une face latérale de la came 200, c'est-à-dire dans une direction parallèle à la direction dans laquelle s'étend la tige 6 à laquelle la came 200 est associée. Lorsque le méplat 6a d'une tige 6 du vérin 2 vient coulisser le long de la rampe 200c, elle se trouve dans une position qui empêche tout déplacement axial de la tige 6. Cette position correspond avantageusement à la position de mise en drapeau des pales de soufflante (les pales viennent aligner leur corde avec l'axe de rotation de l'hélice).

La figure 5C montre ainsi le dispositif 18 lorsque la came 200 est translatée pour se mettre en position de mise en drapeau des pales de soufflante. Lorsque les cames 200 translatent vers cette position, les tiges 6 du vérin 2 translatent axialement (l'épaulement de leur méplat 6a vient en butée contre les rampes 6c en suivant le chemin de came que forment ces rampes 6c), ramenant ainsi les pales jusqu'à la position de mise en drapeau.

Dans cette position de mise en drapeau, on notera que le contact entre les tiges et la came reprend les efforts de rappel subis par les pales, ce qui occasionne une sur-contrainte au niveau de ce contact. Aussi, sur l'une des extrémités du méplat des tiges, il est avantageux de travailler la forme de celui-ci pour qu'il épouse la forme de la rampe de la couronne de sorte à augmenter la surface de contact entre le méplat et la rampe.

## Revendications

1. Dispositif (18) pour le verrouillage du pas et la mise en drapeau de pales de soufflante à orientation réglable d'une hélice de turbomachine, comprenant
un vérin (2) comprenant au moins une partie mobile (6) s'étendant parallèlement à un axe de rotation (X-X) de l'hélice et destinée à être couplée à des pivots (16) des pales de soufflante de l'hélice pour modifier leur calage de pas lorsqu'elle coulisse **caractérisé en ce que** ledit dispositif comprend une pièce mobile (20, 200) par rapport au vérin (2) comprenant des premiers moyens mécaniques (20a, 200a) aptes à coopérer avec le vérin (2) en position de déverrouillage du pas de la pale de soufflante pour permettre à la partie mobile (6) de vérin de coulisser selon une course de vérin étendue ; et des deuxièmes moyens mécaniques (20b, 200b) distincts des premiers moyens mécaniques (20a, 200a) et aptes à coopérer avec le vérin (2) en position de verrouillage du pas de la pale de soufflante pour permettre à la partie mobile (6) de vérin de coulisser selon une course de vérin réduite par rapport à la course de vérin étendue ; et
un actionneur (22, 24, 26) pour déplacer la pièce mobile (20, 200) entre la position de déverrouillage du vérin (2) et la position de verrouillage du vérin (2).

2. Dispositif selon la revendication 1, dans lequel la partie mobile de vérin comprend un méplat (6a) et les premiers moyens mécaniques de la pièce mobile comprennent une encoche (20a, 200a) formée au niveau d'une partie en regard de la partie mobile du vérin et le long de laquelle le méplat de la partie mobile de vérin peut coulisser en position de déverrouillage du pas de la pale de soufflante.

3. Dispositif selon la revendication 1, dans lequel la partie mobile de vérin comprend un méplat (6a) et les deuxièmes moyens mécaniques de la pièce mobile comprennent une butée (20b, 200b) contre laquelle le méplat de la partie mobile de vérin vient en butée en position de verrouillage du pas de la pale de soufflante.

4. Dispositif selon la revendication 1, dans lequel la pièce mobile (20, 200) comprend en outre des troisièmes moyens mécaniques (20c, 200c) distincts des premiers et deuxièmes moyens mécaniques et aptes à coopérer avec le vérin pour l'amener en position de mise en drapeau de la pale de soufflante.

5. Dispositif selon la revendication 4, dans lequel la partie mobile de vérin comprend un méplat (6a) et les troisièmes moyens mécaniques de la pièce mobile comprennent une rampe (20c) faisant saillie depuis une face latérale de ladite pièce mobile et formant chemin de came le long duquel le méplat de la partie mobile de vérin vient coulisser pour amener la partie mobile de vérin en position de mise en drapeau de la pale de soufflante.

6. Dispositif selon la revendication 1, dans lequel la pièce mobile comprend une couronne (20) centrée sur l'axe de rotation de l'hélice, les premiers moyens mécaniques (20a) sont configurés pour coopérer avec le vérin en position de déverrouillage du pas de la pale de soufflante pour permettre à la partie mobile de vérin de coulisser selon une course de vérin étendue, les deuxièmes moyens mécaniques (20b) sont décalés angulairement par rapport aux premiers moyens mécaniques et sont configurés pour coopérer avec le vérin en position de verrouillage du pas de la pale de soufflante pour permettre à la partie mobile de vérin de coulisser selon une course de vérin réduite par rapport à la course de vérin étendue, et l'actionneur comprend des moyens (22, 24, 26) pour faire pivoter la couronne autour de l'axe de rotation de l'hélice.

7. Dispositif selon la revendication 6, dans lequel les moyens pour faire pivoter la couronne (20) autour de l'axe de rotation de l'hélice comprennent un actionneur (22) muni d'un pignon denté (24) engrenant avec des dents (26) portées par la couronne.

8. Dispositif selon la revendication 7, dans lequel les dents de la couronne sont positionnées au niveau d'une périphérie extérieure de la couronne et s'étendent angulairement sur une portion de ladite couronne.

9. Dispositif selon l'une quelconque des revendications 6 à 8, dans lequel la partie mobile (6) de vérin est positionnée à l'intérieur de la couronne (20).

10. Dispositif selon l'une quelconque des revendications 1 à 9, dans lequel la course de vérin étendue correspond sensiblement à la course autorisée pendant le vol du vérin.

11. Dispositif selon l'une quelconque des revendications 1 à 10, comprenant au moins trois parties mobiles de vérin régulièrement réparties autour de l'axe de rotation de l'hélice.

12. Système de commande de l'orientation des pales de soufflante d'une turbomachine, comprenant au moins une hélice munie de pales de soufflante à orientation réglable, ladite hélice étant solidaire en rotation d'un anneau rotatif (17), les pales de soufflante étant couplées, pour le réglage de leur orientation, à un système à vérin (6) et à palier de transfert de mouvement (10), le système comprenant en outre un dispositif (18) selon l'une quelconque des revendications 1 à 11.

13. Turbomachine comprenant au moins un ensemble de pales de soufflante à orientation réglable et un système de commande de l'orientation desdites pales de soufflante selon la revendication 12.

## Patentansprüche

1. Vorrichtung (18) zum Verriegeln der Steigung und zum Verstellen in Richtung Fahne von Gebläseschaufeln mit einstellbarer Ausrichtung eines Turbomaschinenpropellers, umfassend:
einen Zylinder (2), der wenigstens einen beweglichen Teil (6) umfasst, welcher sich parallel zu einer Drehachse (X-X) des Propellers erstreckt und welcher dazu bestimmt ist, mit Drehzapfen (16) der Gebläseschaufeln des Propellers gekoppelt zu werden, um deren Steigungseinstellung zu verändern, wenn er sich verschiebt, **dadurch gekennzeichnet, dass** die Vorrichtung umfasst
ein gegenüber dem Zylinder (2) bewegliches Teil (20, 200) mit ersten mechanischen Mitteln (20a, 200a), die geeignet sind, in der Stellung des Entriegelns der Steigung der Gebläseschaufel mit dem Zylinder (2) zusammenzuwirken, um dem beweglichen Zylinderteil (6) zu ermöglichen, sich entlang eines großen Zylinderhubs zu verschieben, sowie zweiten mechanischen Mitteln (20b, 200b), die von den ersten mechanischen Mitteln (20a, 200a) verschieden und geeignet sind, in der Stellung des Verriegelns der Steigung der Gebläseschaufel mit dem Zylinder (2) zusammenzuwirken, um dem beweglichen Zylinderteil (6) zu ermöglichen, sich entlang eines gegenüber dem großen Zylinderhub verkürzten Zylinderhubs zu verschieben, und
einen Aktor (22, 24, 26), um das bewegliche Teil (20, 200) zwischen der Entriegelungsstellung des Zylinders (2) und der Verriegelungsstellung des Zylinders (2) zu bewegen.

2. Vorrichtung nach Anspruch 1, bei der der bewegliche Zylinderteil eine Abflachung (6a) aufweist und die ersten mechanischen Mittel des beweglichen Teils eine Nut (20a, 200a) umfassen, die im Bereich eines Teils gegenüber dem beweglichen Teil des Zylinders ausgebildet ist und entlang derer die Abflachung des beweglichen Zylinderteils in der Stellung des Entriegelns der Steigung der Gebläseschaufel gleiten kann.

3. Vorrichtung nach Anspruch 1, bei der der bewegliche Zylinderteil eine Abflachung (6a) aufweist und die zweiten mechanischen Mittel des beweglichen Teils einen Anschlag (20b, 200b) umfassen, an dem die Abflachung des beweglichen Zylinderteils in der Stellung des Verriegelns der Steigung der Gebläseschaufel in Anschlag gelangt.

4. Vorrichtung nach Anspruch 1, bei der das bewegliche Teil (20, 200) ferner dritte mechanische Mittel (20c, 200c) umfasst, die von den ersten und zweiten mechanischen Mitteln verschieden und geeignet sind, mit dem Zylinder zusammenzuwirken, um ihn in die Position zur Verstellung der Gebläseschaufel in Richtung Fahne zu bringen.

5. Vorrichtung nach Anspruch 4, bei der der bewegliche Zylinderteil eine Abflachung (6a) aufweist und die dritten mechanischen Mittel des beweglichen Teils eine Rampe (20c) umfassen, die von einer Seitenfläche des beweglichen Teils vorspringt und einen Nockenweg bildet, entlang dessen die Abflachung des beweglichen Zylinderteils gleitet, um den beweglichen Zylinderteil in die Position zur Verstellung der Gebläseschaufel in Richtung Fahne zu bringen.

6. Vorrichtung nach Anspruch 1, bei der der bewegliche Teil einen Kranz (20) umfasst, der um die Drehachse des Propellers zentriert ist, wobei die ersten mechanischen Mittel (20a) dazu ausgelegt sind, in der Stellung des Entriegelns der Steigung der Gebläseschaufel mit dem Zylinder zusammenzuwirken, um dem beweglichen Zylinderteil zu ermöglichen, sich entlang eines großen Zylinderhubs zu verschieben, die zweiten mechanischen Mittel (20b) gegenüber den ersten mechanischen Mitteln winkelmäßig versetzt und dazu ausgelegt sind, in der Stellung des Verriegelns der Steigung der Gebläseschaufel mit dem Zylinder zusammenzuwirken, um dem beweglichen Zylinderteil zu ermöglichen, sich entlang eines gegenüber dem großen Zylinderhub verkürzten Zylinderhubs zu verschieben, und der Aktor Mittel (22, 24, 26) umfasst, um den Kranz um die Drehachse des Propellers zu drehen.

7. Vorrichtung nach Anspruch 6, bei der die Mittel zum Drehen des Kranzes (20) um die Drehachse des Propellers einen Aktor (22) umfassen, der mit einem Zahnritzel (24) versehen ist, das mit von dem Kranz getragenen Zähnen (26) kämmt.

8. Vorrichtung nach Anspruch 7, bei der die Zähne des Kranzes im Bereich eines Außenumfangs des Kranzes angeordnet sind und sich über einen Abschnitt des Kranzes winkelig erstrecken.

9. Vorrichtung nach einem der Ansprüche 6 bis 8, bei der der bewegliche Zylinderteil (6) innerhalb des Kranzes (20) angeordnet ist.

10. Vorrichtung nach einem der Ansprüche 1 bis 9, bei der der große Zylinderhub im Wesentlichen dem während des Fluges zulässigen Hub des Zylinders entspricht.

11. Vorrichtung nach einem der Ansprüche 1 bis 10, umfassend wenigstens drei bewegliche Zylinderteile, die um die Drehachse des Propellers gleichmäßig verteilt sind.

12. System zum Steuern der Ausrichtung der Gebläseschaufeln einer Turbomaschine, umfassend wenigstens einen Propeller, der mit Gebläseschaufeln mit einstellbarer Ausrichtung versehen ist, wobei der Propeller mit einem Drehring (17) drehfest verbunden ist, wobei die Gebläseschaufeln für die Einstellung ihrer Ausrichtung mit einem System mit Zylinder (6) und Bewegungsübertragungslager (10) gekoppelt sind, wobei das System ferner eine Vorrichtung (18) nach einem der Ansprüche 1 bis 11 umfasst.

13. Turbomaschine, umfassend wenigstens eine Anordnung von Gebläseschaufeln mit einstellbarer Ausrichtung und ein System zum Steuern der Ausrichtung der Gebläseschaufeln nach Anspruch 12.

## Claims

1. A device (18) for locking the pitch and for feathering adjustable-pitch fan blades of a turbine engine propeller, the device comprising:
an actuator (2) having at least one movable portion (6) extending parallel to an axis of rotation (X-X) of the propeller and designed to be coupled to pivots (16) of the fan blades of the propeller in order to modify their pitch angle when it slides;
**characterized in that** the device (18) comprises a movable part (20, 200) that is movable relative to the actuator (2) having first mechanical means (20a, 200a) suitable for co-operating with the actuator (2) when in a fan blade pitch-unlocking position in order to enable the actuator movable portion (6) to slide over an extended actuator stroke; and second mechanical means (20b, 200b) distinct from the first mechanical means (20a, 200a) and suitable for co-operating with the actuator (2) when in a fan blade pitch-locking position in order to enable the actuator movable portion (6) to slide over an actuator stroke that is shorter than the extended actuator stroke; and
drive means (22, 24, 26) for moving the movable part (20, 200) between the unlocking position of the actuator (2) and the locking position of the actuator (2).

2. A device according to claim 1, wherein the actuator movable portion includes a flat (6a) and the first mechanical means of the movable part include a notch (20a, 200a) formed in a portion facing the movable portion of the actuator and along which the flat of the movable portion of the actuator can slide when in the fan blade pitch-unlocking position.

3. A device according to claim 1, wherein the movable portion of the actuator includes a flat (6a) and the second mechanical means of the movable part include an abutment (20b, 200b) against which the flat of the movable portion of the actuator comes into abutment when in the fan blade pitch-locking position.

4. A device according to claim 1, wherein the movable part (20, 200) further comprises third mechanical means (20c, 200c) distinct from the first and second mechanical means and suitable for co-operating with the actuator to move it into a fan blade feathered position.

5. A device according to claim 4, wherein the movable portion of the actuator includes a flat (6a) and the third mechanical means of the movable part include a ramp (20c) projecting from a lateral surface of said movable part and forming a cam path along which the flat of the actuator movable portion slides in order to bring the actuator movable portion into the fan blade feathered position.

6. A device according to claim 1, wherein the movable part comprises a ring (20) centered on the axis of rotation of the propeller, the first mechanical means (20a) are configured to co-operate with the actuator in the fan blade pitch-unlocking position to allow the actuator movable portion to slide along an extended actuator stroke, the second mechanical means (20b) are angularly offset relative to the first mechanical means and are configured to co-operate with the actuator when in the fan blade pitch-locking position to allow the actuator movable portion to slide over an actuator stroke that is shorter than the extended actuator stroke, and the drive means comprise means (22, 24, 26) for causing the ring to pivot about the axis of rotation of the propeller.

7. A device according to claim 6, wherein the means for causing the ring (20) to pivot about the axis of rotation of the propeller comprise drive means (22) having a gearwheel (24) meshing with teeth (26) carried by the ring.

8. A device according to claim 7, wherein the teeth of the ring are positioned at an outer periphery of the ring and extend angularly over a portion of said ring.

9. A device according to any one of claims 6 to 8, wherein the movable portions (6) of the actuator are positioned inside the ring (20).

10. A device according to any one of claims 1 to 9, wherein the extended actuator stroke corresponds substantially to the stroke allowed to the actuator in flight.

11. A device according to any one of claims 1 to 10, including at least three movable actuator portions regularly distributed around the axis of rotation of the propeller.

12. A system for controlling the pitch of fan blades of a turbine engine having at least one propeller with adjustable pitch fan blades, said propeller being constrained to rotate with a rotary ring (17), the fan blades being coupled, in order to adjust their pitch, to a system comprising an actuator (6) and a load transfer bearing (10), the system further comprising a device (18) according to any one of claims 1 to 11.

13. A turbine engine including at least one set of adjustable pitch fan blades and a fan blade pitch coupling system according to claim 12.
